# EUROPEAN PATENT SPECIFICATION

(11) **EP 3 654 577 B1**
(45) Date of publication and mention of the grant of the patent: **09.02.2022**
(21) Application number: 18831795.2
(22) Date of filing: 05.07.2018
(51) Int. Cl.: H04L 9/08, H04L 9/32, H04L 29/06, H04L 29/08, G06Q 20/40

(54) **CERTIFICATE MANAGEMENT METHOD, SYSTEM, NETWORK DEVICE AND COMPUTER READABLE STORAGE MEDIUM**
ZERTIFIKATVERWALTUNGSVERFAHREN, SYSTEM, NETZWERKVORRICHTUNG UND COMPUTERLESBARES SPEICHERMEDIUM
PROCÉDÉ DE GESTION DE CERTIFICATS, SYSTÈME, DISPOSITIF DE RÉSEAU ET SUPPORT DE STOCKAGE LISIBLE PAR ORDINATEUR

(30) Priority: 10.07.2017 CN 201710557416
(43) Date of publication of application: 20.05.2020
(73) Proprietor: Tencent Technology (Shenzhen) Company Limited, Shenzhen, Guangdong 518057 (CN)
(72) Inventor: LIU, Binhua, Shenzhen Guangdong 518057 (CN); GUO, Rui, Shenzhen Guangdong 518057 (CN); LI, Maocai, Shenzhen Guangdong 518057 (CN); LIANG, Jun, Shenzhen Guangdong 518057 (CN); TU, Haitao, Shenzhen Guangdong 518057 (CN); ZHAO, Qi, Shenzhen Guangdong 518057 (CN); WANG, Zongyou, Shenzhen Guangdong 518057 (CN); ZHANG, Jianjun, Shenzhen Guangdong 518057 (CN); ZHU, Dawei, Shenzhen Guangdong 518057 (CN); QIN, Qing, Shenzhen Guangdong 518057 (CN)
(74) Representative: AWA Sweden AB
(86) International application number: PCT/CN2018/094694
(87) International publication number: WO 2019/011179

(56) References cited:
- CN-A- 106 789 089
- CN-A- 106 888 087
- CN-A- 106 888 087
- CN-A- 107 395 343
- US-A1- 2016 292 680
- US-A1- 2016 300 234
- US-A1- 2017 147 808

## Description

### Technical Field

The present application relates to the field of network technologies, and in particular to a certificate management method and system, a network device and a computer-readable storage medium.

### Background

With the advent of digital cryptocurrencies such as bitcoin, a blockchain technology is also emerging. A blockchain network is composed of a plurality of blockchain nodes based on a consensus mechanism. Each blockchain node is deployed by a service institution, and plurality of blockchain nodes are configured with a same blockchain for storing data interacted with other network devices. There may be many types of blockchains, such as a public chain and an alliance chain. Participants in the public chain have trusted each other and no identify verification is required, while for participants in the alliance chain, the identify verification is required to establish trust between these participants. In an application scenario of the alliance chain, one of two parties interacting with each other generally needs to verify an identity of the other party based on the certificate of the other party.

In related technologies, a certificate center server uniformly manages certificates of each blockchain node and terminal, and the terminal or the blockchain node may request the certificate center server to registere a certificate. During the interaction between the terminal and the blockchain node, it is taken as an example that the blockchain node responds to a request of the terminal. The blockchain node may verify an identity of the terminal based on the certificate of the terminal stored in the certificate center server and respond to the request of the terminal after the verification is passed.

During a process of implementing the present application, the inventors found that the related technologies have at least the following problems:
the certificates of each blockchain node and a terminal served by each blockchain node are uniformly managed by the certificate center server, which results in poor flexibility of certificate management.

US 2017/0147808A1 provides a method for token management in a multi-tenant transactional database, including: utilizing at least one processor to execute computer code that performs the steps of: receiving a request for one or more tokens to be used by an entity; verifying that the entity is qualified to receive the one or more tokens for use on the multi-tenant transactional database; and responsive to the verifying, issuing, using a processor associated with a database management device, the one or more tokens for use by the entity in association with a transaction in the multi-tenant transactional database; each of the one or more tokens comprising a function of a public key that corresponds to a private key associated with a token of the one or more tokens.

CN 106888087A discloses a certificate managing method and device, which belongs to the technical field of computers. The method is applied to a certificate center server or a request device which comprises the node server of a terminal or a block chain. The method comprises the steps that the certificate information of a certificate currently stored in the certificate center server and the fingerprint information of the certificate stored in the node server are acquired, wherein the certificate is any certificate stored by the certificate center server, and the fingerprint information of the certificate includes at least authentication information acquired by signing the certificate information, which is acquired in advance, of the certificate; the authentication information in the fingerprint information is verified; and if the verification is not passed, data recovery is carried out on the certificate information of the certificate through the certificate center server. According to the invention, problems in the use of the certificate can be avoided.

### Summary

In accordance with various embodiments of the present application, a certificate management method and system, a network device and a computer-readable storage medium are provided.

A certificate management system includes a plurality of certificate center servers, a plurality of blockchain nodes and a plurality of terminals, wherein a plurality of service institutions deploy their own
certificate center servers respectively, each certificate center server is configured to manage a certificate of a terminal served by the
service institution corresponding to the certificate center server, the service institution corresponding to the certificate center server is a service institution deploying the certificate center server, the plurality of blockchain nodes are configured with a same blockchain, and the blockchain is used for storing fingerprint information of a certificate of a terminal served by each service institution;
each certificate center server is configured to register or update the certificate for the terminal served by the service institution corresponding to the certificate center server, obtain fingerprint information of the certificate based on at least one piece of signature information of the certificate, and send the fingerprint information to any blockchain node, wherein the fingerprint information is used for verifying whether the certificate is tampered with;
the blockchain node is configured to store the fingerprint information to the blockchain when receiving the fingerprint information;
wherein the certificate management system further includes a general certificate center server, configured to manage the certificates of each certificate center server and each blockchain node, determine whether to authorize a network device to become a certificate center server.

A certificate management method is applied to a certificate management system, wherein a plurality of service institutions deploy their own
certificate center servers respectively, the certificate management system comprises a plurality of certificate center servers, a plurality of blockchain nodes and a plurality of terminals, each certificate center server is configured to manage a certificate of a terminal served by the
service institution corresponding to the certificate center server, the service institution corresponding to the certificate center server is a service institution deploying the certificate center server, the plurality of blockchain nodes are configured with a same blockchain, and the blockchain is used for storing fingerprint information of a certificate of a terminal served by each service institution;
the method comprises:
   registering or updating, by each certificate center server, the certificate for the terminal served by the service institution corresponding to the certificate center server;
   obtaining, by the certificate center server, fingerprint information of the certificate based on at least one piece of signature information of the certificate;
   sending, by the certificate center server, the fingerprint information to any blockchain node, wherein the fingerprint information is used for verifying whether the certificate is tampered with; and
   storing, by the blockchain node, the fingerprint information to the blockchain when receiving the fingerprint information;
   wherein the certificate management system further includes a general certificate center server, configured to manage the certificates of each certificate center server and each blockchain node, determine whether to authorize a network device to become a certificate center server.

One or more computer-readable storage mediums are configured in any network device among the plurality of certificate center servers, the plurality of blockchain nodes and the plurality of terminals which are comprised in the certificate management system as claimed in the above first aspect, and store computer-readable instructions which when loaded and executed by one or more processors, perform functions of the network device.

A network device is any network device among the plurality of certificate center servers, the plurality of blockchain nodes and the plurality of terminals which are comprised in the certificate management system as claimed in the above first aspect, and comprises one or more processors and a memory, wherein the memory stores computer-readable instructions which when loaded and executed by the one or more processors, perform functions of the network device.

The details of one or more embodiments of the present application are set forth in the accompanying drawings and the description below. Other features, objects and advantages of the present application will be more apparent from the description, drawings and claims of the present application.

### Brief Description of the Drawings

In order to describe the technical solutions provided by the embodiments of the present application clearly, the accompanying drawings referred to in the embodiments will be illustrated briefly hereinafter. Obviously, these accompanying drawings depicted hereinafter are only some embodiments of the present application, and according to these accompanying drawings, those skilled in the art can obtain other accompanying drawings without creative labor.
Fig. 1 is a block diagram of a certificate management system according to embodiments of the present application.
Fig. 2 is a flowchart of a certificate management method according to embodiments of the present application.
Fig. 3 is a block diagram of a certificate management system according to embodiments of the present application.
Fig. 4 is a block diagram of a certificate management system according to embodiments of the present application;
Fig. 5 is a block diagram of a certificate management system according to embodiments of the present application.
Fig. 6 is a block diagram of a server according to embodiments of the present application.
Fig. 7 is a block diagram of a terminal according to embodiments of the present application.

### Detailed Description

In order to make the objects, technical solutions and advantages of the present application clearer, the present application will be described in detail hereinafter with reference to the accompanying drawings and embodiments. It should be understood that the specific embodiments described are merely illustrative of the present application and are not used to limit the present application.

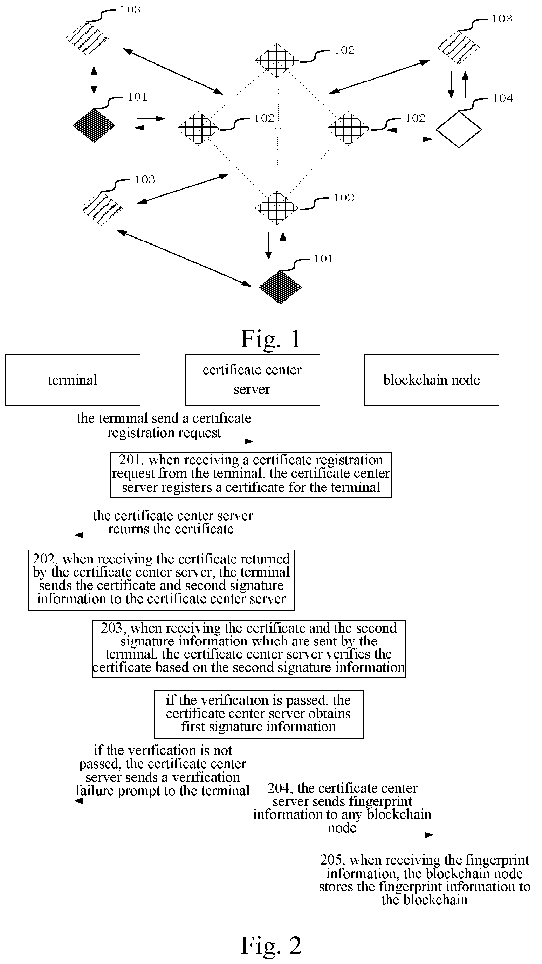

Fig. 1 is a block diagram of a certificate management system according to embodiments of the present application. Referring to Fig. 1, the certificate management system includes a plurality of certificate center servers 101, a plurality of blockchain nodes 102 and a plurality of terminals 103 Each certificate center server 101 is configured to manage a certificate of a terminal 103 served by a service institution corresponding to the certificate center server 101. The service institution corresponding to the certificate center server 101 refers to a service institution deploying the certificate center server 101. The plurality of blockchain nodes 102 are configured with the same blockchain. The blockchain is used for storing fingerprint information of a certificate of a terminal 103 served by each service institution.

The certificate center server 101 is configured to register the certificate for the terminal 103 served by the service institution corresponding to the certificate center server 101, obtain fingerprint information of the certificate based on at least one piece of signature information of the certificate, and send the fingerprint information to any blockchain node 102. The signature information is used for verifying whether the certificate has been tampered with. The blockchain node 102 is configured to store the fingerprint information to the blockchain when receiving the fingerprint information.

In the embodiments of the present application, identity verification is required between network devices interacting with each other, which may be applied to a scenario of the alliance chain. The service institution refers to an institution that provides a network service for any terminal 103. For example, a plurality of service institutions may be a bank A, a bank B, a network service provider and the China Banking Regulatory Commission respectively. Each service institution has its own user group, and terminals used by users in the user group serve as terminals served by the service institution. The plurality of service institutions have a cooperative relationship, and collectively process required services such as payment services or investment services for the plurality of terminals 103 based on the blockchain nodes 102 deployed by the plurality of service institutions. The plurality of blockchain nodes 102 are configured with the same blockchain. The blockchain is used for storing service data generated during the interaction between the blockchain nodes 102 and the terminals 103, and is also used for storing the fingerprint information of the certificate of the terminals served by each service institution. That is to say, although the service institution independently manages the certificate of the terminal served by it, the fingerprint information of the certificate can be stored in the blockchain, so that a full amount of fingerprint information is stored in the blockchain, and the fingerprint information of the certificate can be shared among the service institutions.

In order to avoid exposing user resources to other service institutions and ensure the privacy of user resources of each service institution, each service institution may deploy one certificate center server 101 to manage the certificate of the terminal 103 served by it, for example, registering the certificate for the terminal 103, updating the certificate, encrypting and storing the certificate in a certificate database, and restoring a correct certificate when the certificate is tampered with.

In the embodiments of the present application, in order to ensure that each certificate center server 101 can manage the certificate for the terminal served by a service institution corresponding to the certificate center server 101, the terminal 103 may be configured with a network address of the certificate center server 101, so that the terminal 103 can send a certificate request to the certificate center server 101 based on the network address. Alternatively, the terminal 103 may be configured with a proxy server address of the service institution corresponding to the certificate center server 101, so that a proxy server forwards the received certificate request of the terminal 103 to the certificate center server 101 deployed by the service institution.

In addition, the certificate management system may further include a supervision terminal. The supervision terminal is configured to supervise a certificate management process of the certificate center server and may be a terminal of a supervision organization such as the Central Bank, the China Banking Regulatory Commission and the China Insurance Regulatory Commission.

For the certificates of each certificate center server and each blockchain node, a certificate management method is implemented as follows: one of the plurality of blockchain nodes is configured to configure public information in the certificates of each blockchain node and each certificate center server, and one of the plurality of certificate center servers is configured to configure the public information in the certificates of each blockchain node and each certificate center server. In an implementation mode, in order to enable the certificate management system to achieve a better decentralization effect and enable the identity verification to be performed based on the public information of the certificate during the interaction between the blockchain nodes, between the certificate center servers and between the blockchain nodes and the certificate center servers, the public information in the certificates of all the blockchain nodes and the certificate center servers may be written into a configuration file of each blockchain node (or certificate center server ) in advance. The public information in a certificate includes at least a blockchain node identifier (or certificate center server identifier) and a public key of the network device. The interaction between a blockchain node 1 and a blockchain node 2 is taken as an example. When receiving an interaction request from the blockchain node 2, the blockchain node 1 may obtain a configured public key of the blockchain node 2 based on a blockchain identifier of the blockchain node 2, and verify the interaction request based on the public key of the blockchain node 2. If the verification is passed, the blockchain node 1 interacts with the blockchain node 2; otherwise, the blockchain node 1 ignores the interaction request.

The above-mentioned mode for configuring the public information in the certificate is to avoid the leaking of the private information in the certificate. However, in order to improve the integrity of the certificate, one of the plurality of blockchain nodes may be configured to configure the certificates of each blockchain node and each certificate center server, and one of the plurality of certificate center servers may be configured to configure the certificates of each blockchain node and each certificate center server.

There is another certificate management method, which is implemented as follows. The certificate management system may further include a general certificate center server 104. The general certificate center server 104 manages the certificates of each certificate center server and each blockchain node. During a management process, the certificate center server or the blockchain node may request the general certificate center server to register the certificate, and may also request to update the certificate. A specific certificate registration process is the same as the process that the terminal requests the certificate center server to register the certificate, and a specific certificate updating process is the same as the process that the terminal requests the certificate center server to update the certificate. When the certificate is registered or updated, the blockchain node or the certificate center server needs to provide at least identity information such as an institution code and a business license, and may also provide contact information, etc.

Moreover, the general certificate center server 104 may also decide whether to authorize a network device to become a certificate center server. For example, a server A deployed by a network service provider sends a certificate registration request to the general certificate center server. Even if the identity information of the server A passes the verification, the general certificate center server may neither authorize the server A to become the certificate center server nor register a certificate for the server A according to configured management requirements. The configured management requirements are not limited to: the number of certificate center servers in the certificate management system is not greater than a preset value or a designated service institution cannot deploy a certificate center server.

Of course, if a certain service institution does not deploy its own certificate center server, the certificates of terminals served by the service institution may be managed by the general certificate center server 104. The certificates of certificate center servers and blockchain nodes that are deployed by the same service institution may be the same.

Fig. 2 is a flowchart of a certificate management method according to embodiments of the present application. Referring to Fig. 2, the method may be applied to an interaction process among a blockchain node, a certificate center server and a terminal served by a service institution corresponding to the certificate center server in the above certificate management system, and may include the following steps.

Step 201, when receiving a certificate registration request from the terminal, the certificate center server registers a certificate for the terminal.

The certificate registration request is used for requesting to register the certificate. The certificate registration request carries certificate information required for the registration of the certificate, which may include public information and private information. The public information refers to information which can be disclosed to other network devices, may include at least a public key of the certificate (also known as the public key of the terminal), and may also include a certificate identifier generated based on the public key of the certificate. The certificate identifier is used for uniquely identifying one certificate, which is also equivalent to uniquely identifying the terminal using the certificate. The private information refers to information which cannot be disclosed to other network devices. The private information may be set according to operation requirements, and is generally the private information of a user, such as a certificate number and a certificate type of the user, a mailbox and a telephone number of the user, and the like. The certificate is used for verifying the identity of the terminal when the terminal interacts with other network devices.

In this step, the terminal may obtain the public information and the private information required for the registration of the certificate, generate a certificate registration request based on the public information and the private information, and send the certificate registration request to the certificate center server for managing the certificate of the terminal. When receiving the certificate registration request, the certificate center server may register the certificate for the terminal based on the public information and the private information carried in the certificate registration request. The certificate may include the above public information and private information, and may also include certificate state information, such as a valid state or an invalid state. After registering the certificate for the terminal, the certificate center server may store the certificate in a certificate database. In order to ensure the security of the certificate and prevent the certificate from being tampered with, the certificate center server may store the certificate after encrypting the certificate or restricting access to the certificate database.

In the embodiments of the present application, the certificate registration process may be triggered by a user using the terminal or automatically triggered by the terminal. For example, the user may trigger a certificate registration option based on a certificate registration function that is provided by the service institution deploying the certificate center server, fill certificate information required for the registration of the certificate on a certificate registration interface and submit the certificate information. As another example, when accessing the certificate center server, the terminal automatically generates the certificate registration request.

The public key of the certificate may be generated by the terminal based on the private key of the certificate, and the private key of the certificate is a character string randomly generated by the terminal. For example, the public key of the certificate may be generated based on the private key of the certificate and an elliptic curve algorithm. Alternatively, the public key and the private key of the certificate may be allocated and sent to the terminal by the certificate center server. In addition, the certificate identifier obtained by the certificate center server may be carried in the certificate registration request after being generated by the terminal based on the public key of the certificate, or may be generated by the certificate center server based on the public key of the certificate carried in the certificate registration request. Specifically, the certificate identifier is obtained based on the public key of the certificate and by using a hash algorithm.

In a practical application scenario, if the certificate registration process needs to be approved, the certificate registration request may further include a user identity certification file, so that the certificate center server may verify the identity of the user using the terminal based on the user identity certification file, and register the certificate for the terminal after the identity verification is passed. Of course, the terminal may query an approval state of the certificate at any time during the certificate registration process.

Step 202, when receiving the certificate returned by the certificate center server, the terminal sends the certificate and second signature information to the certificate center server, wherein the second signature information is a signature made by the terminal for the certificate.

In this step, the certificate center server may return the registered certificate to the terminal. When receiving the certificate, the terminal may make a signature for the certificate by using the private key of the certificate to obtain the second signature information, and send the second signature information and the certificate to the certificate center server.

In particular, when receiving the certificate, the terminal may check information in the certificate. For example, when receiving the certificate, the terminal may display the information in the certificate, so that the user can check whether the information in the certificate is correct. When receiving a triggering operation of a certificate confirmation option, the terminal determines that the information in the certificate is correct, and performs the step of sending the certificate and the second signature information to the certificate center server. The certificate confirmation option is used for indicating that the user has confirmed that the information in the certificate is correct. As another example, when receiving the certificate, the terminal matches the information in the certificate with the stored information required for the registration of the certificate. If the matching is successful, the terminal performs the step of sending the certificate and the second signature information to the certificate center server. If it is determined that the information in the certificate is incorrect after the information is checked, the terminal may resend the certificate registration request to the certificate center server to register a new certificate.

The terminal may also back up or store the private key of the certificate in a trusted third party key management system, so that the private key of the certificate can be recovered even if it is lost.

In a practical application scenario, if the certificate registration process needs to be approved, the certificate center server may calculate a hash value of the user identity certification file by using a preset hash algorithm and add the hash value to the certificate. Therefore, when receiving the certificate returned by the certificate center server, the terminal may calculate the hash value of the user identity certification file carried in the returned certificate by using the configured preset hash algorithm, and compare the hash value in the returned certificate with the hash value calculated by it. If the two hash values are the same, it is determined that the user identity certification file is correct; and if the two hash values are different, it is determined that the user identity certification file is incorrect.

Step 203, when receiving the certificate and the second signature information which are sent by the terminal, the certificate center server verifies the certificate based on the second signature information. If the verification is passed, the certificate center server obtains first signature information. The first signature information is a signature made by the certificate center server for the certificate. If the verification is not passed, the certificate center server sends a verification failure prompt to the terminal.

In this step, the certificate center server may parse the second signature information based on the public key of the certificate to obtain second signature verification information, obtain a feature value of the certificate according to a preset feature value algorithm, and compare the second signature verification information with the feature value. If the second signature verification information is the same as the feature value, it is indicated that the certificate is correct, and thus the certificate center server determines that the verification is passed and makes a signature for the certification by using the private key of the certificate center server to obtain the first signature information. If the second signature verification information is different from the feature value, it is indicated that the certificate is incorrect and may be tampered with, and thus the certificate center server determines that the verification is not passed and sends the verification failure prompt to the terminal.

In a practical application scenario, if the certificate registration process needs to be approved, operators of the certificate center server need to approve the certificate after the certificate center server passes the verification of the certificate. The terminal may query a certificate state based on the certificate identifier to know whether the certificate is approved successfully. If the certificate is approved successfully, step 204 is performed; otherwise, the certificate may be recorded as an unapproved certificate.

Step 204, the certificate center server sends fingerprint information including the first signature information and the second signature information to any blockchain node.

In this step, the certificate center server may obtain the fingerprint information of the certificate based on the first signature information and the second signature information, and send the fingerprint information to any blockchain node. The fingerprint information may include the public information in the certificate. In addition, in order to enable the blockchain node to verify that the network device sending the fingerprint information is the certificate center server, the certificate center server may also send third signature information to the blockchain node. The third signature information is a signature made for the fingerprint information by using the private key of the certificate center server.

The information formats of the fingerprint information and the third signature information that are sent by the certificate center server may be shown in Table 1. The fingerprint information includes the public information in the certificate, the first signature information and the second signature information.

**Table 1**

| | | | |
|---|---|---|---|
| public information in certificate | first signature information: signature made for the certificate by using the private key of the certificate | second signature information: signature made for the certificate by using the private key of the certificate center server | third signature information: signature made for the fingerprint information by using the private key of the certificate center server |

Since the information included in the fingerprint information is the public information of the certificate and the signature information corresponding to the certificate (i.e. the complete information of the certificate), the fingerprint information does not expose the private information of the user.

The above steps 202 to 204 describe that the certificate center server obtains the fingerprint information of the certificate based on at least one piece of signature information of the certificate, and the signature information is used for verifying whether the certificate is tampered with. Actually, the fingerprint information obtained and sent by the certificate center server may at least include the first signature information, but does not include the second signature information, so that the flexibility of certificate management can be improved herein.

Step 205, when receiving the fingerprint information, the blockchain node stores the fingerprint information to the blockchain.

In this step, when receiving the fingerprint information and the third signature information, the blockchain node may verify the fingerprint information based on the third signature information. If the verification of the fingerprint information is passed, the blockchain node stores the fingerprint information and the third signature information to the blockchain. If the verification of the fingerprint information is not passed, the blockchain node may ignore the fingerprint information. Specifically, the blockchain node may parse the third signature information by using the public key of the certificate center server to obtain the third signature verification information, obtain a feature value of the fingerprint information according to a preset feature value algorithm, and compare the third signature verification information with the feature value. If the third signature verification information is the same as the feature value, it is indicated that the fingerprint information is correct, and thus the blockchain node determines that the verification is passed, and stores the fingerprint information and the third signature information to the blockchain. If the third signature verification information is different from the feature value, it is indicated that the certificate is incorrect and may be tampered with, and thus the blockchain node determines that the verification is not passed, and ignores the fingerprint information. Since the public key of each network device belongs to public information of the network device, each network device in the certificate management system may be configured with its own public key, or even if a certain network device is not configured with a public key, the public key of the certain network device can be requested.

When storing the fingerprint information to the blockchain, the blockchain node may forward the fingerprint information to other blockchain nodes configured with the blockchain, and store the fingerprint information to the blockchain when a preset number of blockchain nodes reach a consensus on storing the fingerprint information. As required by the number of blockchain nodes reaching the consensus, the preset number may be determined according to a consensus algorithm operated by the blockchain nodes. In the embodiments of the present application, the specific value of the preset number is not limited. When storing the fingerprint information, the blockchain node may obtain all information in a block header of a first block from the blockchain, obtain a block header feature value of the first block based on all the information in the block header of the first block, and calculate a feature value of the fingerprint information to be stored in a block body of a second block (and the third signature information) to obtain a block body feature value of the second block. Further, the blockchain node may store the block header feature value of the first block and the block body feature value of the second block (which may further include a version number, a difficulty value and a time stamp) to a block header of the second block, and stores the fingerprint information (and the third signature information) to the block body of the second block to generate the second block, so that the second block is related to the first block through the block header feature value of the first block. In this way, the purpose of concatenating the blocks in the blockchain can be realized, and the tampering with any information in a block can be detected by tracing a block header feature value of a previous block stored in the block header of the block, thereby ensuring the security of fingerprint information. The first block is the previous block of the second block.

Although the service institution manages the certificates of the served terminals by itself, transactions between terminals served by different service institutions are not affected. Based on a consensus mechanism of blockchain, the terminals served by different service institutions may still conduct transactions based on the consensus of multiple blockchain nodes. Certainly, normal transactions may also be conducted between the terminals served by the same service institution.

In the embodiments of the present application, when receiving a transaction request from a first terminal, the blockchain node may process the transaction request to complete a transaction between the first terminal and a second terminal. The transaction request is used for requesting the transaction between the first terminal and the second terminal. In the embodiments of the present application, the traded resources are not limited. For example, the resources may be online banking, game currency or files, etc. The first terminal and the second terminal are served by the same service institution or by different service institutions.

Specifically, when any blockchain node receives a transaction request, it may forward the transaction request to a blockchain node running in a leading state among the plurality of blockchain nodes. The blockchain node in the leading state sends the transaction request to other blockchain nodes, and stores the transaction request to the blockchain when a preset number of blockchain nodes among the plurality of blockchain nodes reach a consensus on the transaction request. In response to the transaction request, for example, when the transaction request is a transfer request, the blockchain node in the leading state transfers a transfer amount in an account address of the first terminal to an account address of the second terminal based on the account address of the first terminal, the account address of the second terminal and the transfer amount in the transaction request.

In related technologies, when the blockchain node processes a service of a terminal, it needs to obtain the certificate of the terminal from the certificate center server to verify the identity of the terminal. In this way, not only private information in the certificate may be exposed to the blockchain node, but also the identity of the terminal cannot be verified once the certificate center server fails, which will result in the failure of normal transaction. However, in the embodiments of the present application, the fingerprint information stored by the blockchain node may include public information in the certificate. When the blockchain node receives a service request from the terminal, it may verify the identity of the terminal based on the public information in the fingerprint information. If the identify verification of the terminal is passed, the blockchain node may respond to the service request of the terminal; and if the identify verification of the terminal is not passed, the blockchain node may ignore the service request. In a specific process of verifying the identity of the terminal, the blockchain node may query corresponding fingerprint information on the blockchain based on a certificate identifier in the service request. If a certificate identifier in any fingerprint information is successfully queried and the certificate identifier is the same as the certificate identifier in the service request, and if various pieces of public information in the fingerprint information meet the preset requirements, it is determined that the verification is passed; otherwise, it is determined that the verification is not passed. The preset requirements may be set according to specific public information and verification requirements. For example, the preset requirements may be that the certificate state information is valid.

In a practical application scenario, in order to ensure the reliability and security of a transaction process between terminals, the blockchain node may verify the terminals involved in the transaction request based on the fingerprint information stored on the blockchain. For example, when the blockchain node receives the transaction request from the first terminal, it verifies the identity of the first terminal based on the public information in the fingerprint information of the certificate of the first terminal stored on the blockchain and verifies the identity of the second terminal based on the public information in the fingerprint information of the certificate of the second terminal stored on the blockchain. If the identity verification of the first terminal and the identity verification of the second terminal are both passed, the blockchain node processes the transaction request to complete the transaction between the first terminal and the second terminal. A specific verification process is the same as the above process of verifying the identity of the terminal.

The above certificate management process is described by taking the certificate registration process as an example, and a following certificate management process will be described by taking a certificate updating process as an example.

1. When receiving a certificate updating request from the terminal, the certificate center server updates the certificate for the terminal.

This step is the same as step 201. However, the certificate updating request is used for updating the registered certificate of the terminal, and thus carries at least a certificate identifier of the registered certificate and information in the to-be-updated certificate. When receiving the certificate updating request, the certificate center server may update the stored certificate based on the information in the to-be-updated certificate carried in the certificate updating request.

In a practical application scenario, if the certificate updating process needs to be approved, the certificate updating request may further include a user identity certification file, so that the certificate center server may verify the identity of the user using the terminal based on the user identity certification file, and update the certificate for the terminal after the verification is passed.

2. When receiving the certificate returned by the certificate center server, the terminal sends the certificate and the second signature information to the certificate center server, wherein the second signature information is a signature made by the terminal for the certificate.

This step is the same as step 202, but in this step, the certificate returned by the certificate center server is an updated certificate.

3. When receiving the certificate and the second signature information which are sent by the terminal, the certificate center server verifies the certificate based on the second signature information. If the verification is passed, step 204 is performed; if the verification is not passed, the certificate center server sends a verification failure prompt to the terminal.

This step is the same as step 203, but in this step, the certificate verified by the certificate center server is an updated certificate.

4. The certificate center server obtains the first signature information, which is a signature made by the certificate center server for the certificate, and sends the fingerprint information including the first signature information and the second signature information to any blockchain node.

This step is the same as step 204, but in this step, the certificate signed by the certificate center server is an updated certificate and the sent fingerprint information is the fingerprint information of the updated certificate.

5. When receiving the fingerprint information, the blockchain node stores the fingerprint information to the blockchain.

This step is the same as step 205, but in this step, the fingerprint information stored by the blockchain node is the fingerprint information of the updated certificate. Based on a characteristic that the data in the blockchain cannot be changed, during the certificate updating process the blockchain node does not operate the fingerprint information of the certificate that has been stored but has not been updated, but stores the fingerprint information of the updated certificate to the blockchain as well. Multiple pieces of fingerprint information corresponding to the same certificate identifier may be stored on the blockchain at the same time. However, when the blockchain node needs to provide the fingerprint information corresponding to any certificate identifier but the certificate identifier corresponds to multiple pieces of fingerprint information, the blockchain node may provide the latest fingerprint information according to time stamps of the multiple pieces of fingerprint information to ensure the validity of the provided fingerprint information.

In the embodiments of the present application, a plurality of service institutions deploy their own certificate center servers respectively, so that user resources of each service institution can be hidden from other service institutions. Further, the plurality of certificate center servers operate independently, and thus even if any certificate center server fails, the normal operation of other certificate center servers is not affected, thereby improving the flexibility of certificate management. Moreover, since the fingerprint information of the certificate is stored on the blockchain, the certificate center server, the terminal and the supervision terminal can verify the certificate with the fingerprint information on the blockchain, find the tampered certificate at any time, and restore the correct certificate based on the certificate center server.

In addition, each certificate center server may store the fingerprint information of the certificate to the blockchain based on the blockchain nodes deployed by the same service institution, so that a plurality of service institutions can still share the public information in the certificate, but the private information in the certificate cannot be exposed, thereby sharing the public information according to service requirements and protecting the private information.

In the embodiments of the present application, in order to prevent the certificate stored in the certificate database by the certificate center server from being tampered with, the certificate center server, the terminal or the supervision terminal may verify the certificate based on the fingerprint information on the blockchain.

(1) The certificate center server obtains the fingerprint information of the certificate from the blockchain, and verifies the certificate stored by the certificate center server based on at least one piece of signature information in the fingerprint information.

During the certificate verification process, the certificate center server may obtain the fingerprint information from the blockchain node based on the certificate identifier, parse the first signature information by using the public key of the certificate center server to obtain the first signature verification information, then obtain a feature value of the certificate stored in the certificate database according to a preset feature value algorithm, and compare the feature value with the first signature verification information. If the feature value is the same as the first signature verification information, it is indicated that the certificate is correct, and the certificate center server determines that the verification is passed. If the feature value is different from the first signature verification information, it is indicated that the certificate is tampered with, and the certificate center server determines that the verification is not passed. The certificate center server may also parse the second signature information by using the public key of the certificate to obtain the second signature verification information, then obtain a feature value of the certificate stored in the certificate database according to a preset feature value algorithm, and compare the feature value with the second signature verification information. If the first signature verification information and the second signature verification information are the same as their corresponding feature values respectively, it is indicated that the certificate is correct, and the certificate center server determines that the verification is passed. If any signature verification information is different from its corresponding feature value, it is indicated that the certificate is tampered with, and the certificate center server determines that the verification is not passed.

The above certificate verification process may be performed periodically, and a verification period is not limited in the embodiments of the present application.

(2) The terminal obtains the fingerprint information of the certificate from the blockchain, and verifies the certificate stored by the certificate center server based on at least one piece of signature information in the fingerprint information.

During the certificate verification process, the terminal may obtain the fingerprint information from the blockchain node based on the certificate identifier, obtain the certificate from the certificate center server based on the certificate identifier, and further verify the certificate stored by the certificate center server based on at least one piece of signature information in the fingerprint information. The specific verification process is the same as the above step (1).

In a practical application scenario, the terminal may perform the certificate verification process during the registration process to determine whether the fingerprint information of the certificate have been stored on the blockchain and verify whether the fingerprint information stored on the blockchain is correct.

In order to ensure the security of the certificate and prevent the private information in the certificate from being exposed to network devices other than the network device holding the certificate, the access to the complete certificate information may be opened only to the network device holding the certificate. When the certificate center server receives an acquisition request for the certificate from any network device, it may determine whether the network device is a terminal holding the certificate based on the certificate identifier of the network device carried by the acquisition request. If so, the certificate center server returns the certificate to the network device, and if not, the certificate center server returns the public information in the certificate to the network device. Therefore, when the certificate center server receives an acquisition request for the certificate from another network device, the certificate center server may send the public information in the certificate to the network device. The "another network device" refers to a network device other than the terminal.

In a practical application scenario, the network device can also make a signature for the request information by using the private key of the certificate of the network device to obtain fourth signature information, and send an acquisition request including the fourth signature information and the request information to the certificate center server. The request information at least includes a certificate identifier of the network device and a certificate identifier of the terminal, so that the certificate center server can verify the request information based on the fourth signature information and the public key of the network device. If the verification is passed, it is indicated that the acquisition request is indeed from the network device. If the certificate identifier of the network device is the same as the certificate identifier of the terminal, it is indicated that the acquisition request is indeed from the terminal, and the certificate center server may return the certificate to the network device. If the certificate identifier of the network device is different from the certificate identifier of the terminal, it is indicated that the acquisition request comes from another network device, and the certificate center server may return the public information in the certificate to the network device. In addition, if the verification is not passed, the certificate center server may ignore the acquisition request.

(3) The supervision terminal obtains the fingerprint information of the certificate from the blockchain, and verifies the certificate stored by the certificate center server based on at least one piece of signature information in the fingerprint information.

The certificate verification process is the same as the above step (2). However, the supervision terminal has the right to supervise whether the certificate has been tampered with, and thus has an access to the complete certificate information of any terminal. When the certificate center server receives an acquisition request of the supervision terminal for the certificate, it may return the certificate to the supervision terminal. Certainly, the acquisition request sent by the supervision terminal may carry fifth signature information, which is a signature made for the request information based on the private key of the supervision terminal, so that the certificate center server verifies the request information based on the fifth signature information and the public key of the supervision terminal. If the verification is passed, the certificate center server returns the certificate to the supervision terminal; otherwise, the certificate center server ignores the acquisition request.

In the embodiments of the present application, in order to ensure the correctness of the certificate in the use process and maintain a characteristic that the certificate itself can be used to verify the identity of the terminal, if the verification of the certificate in any of the above certificate verification processes is not passed, the certificate center server may restore the correct certificate based on a backed up certificate. Specifically, the certificate center server may restore the correct certificate based on a certificate backed up by a network log of the certificate center server. The network log is used for recording all service data of the certificate center server.

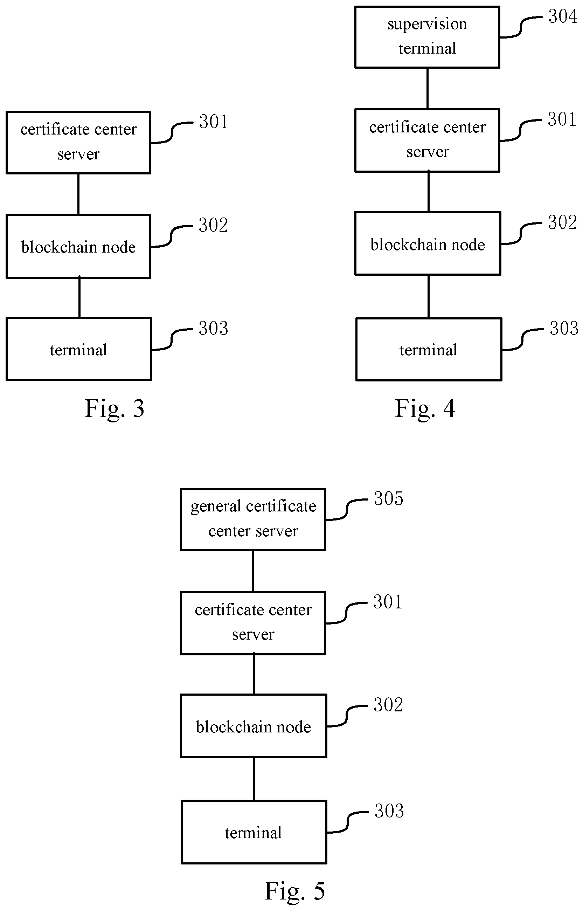

Fig. 3 is a block diagram of a certificate management system according to embodiments of the present application. Referring to Fig. 3, the certificate management system includes a plurality of certificate center servers 301, a plurality of blockchain nodes 302 and a plurality of terminals 303. Each certificate center server 301 is configured to manage a certificate of a terminal 303 served by a service institution corresponding to the certificate center server 301. The service institution corresponding to the certificate center server 301 is a service institution deploying the certificate center server 301. The plurality of blockchain nodes 302 are configured with the same blockchain. The blockchain is used for storing fingerprint information of a certificate of a terminal 303 served by each service institution.

The certificate center server 301 is configured to register or update the certificate for the terminal 303 served by the service institution corresponding to the certificate center server, obtain fingerprint information of the certificate based on at least one piece of signature information of the certificate, and send the fingerprint information to any blockchain node 302. The signature information is used for verifying whether the certificate is tampered with.

The blockchain node 302 is configured to store the fingerprint information to the blockchain when receiving the fingerprint information.

In the embodiments of the present application, a plurality of service institutions deploy their own certificate center servers respectively, so that user resources of each service institution can be hidden from other service institutions. Further, the plurality of certificate center servers operate independently, and thus even if any certificate center server fails, the normal operation of other certificate center servers is not affected, thereby improving the flexibility of certificate management. Moreover, since the fingerprint information of the certificate is stored on the blockchain, the certificate center server, the terminal and the supervision terminal can verify the certificate with the fingerprint information on the blockchain, find the tampered certificate at any time, and restore the correct certificate based on the certificate center server.

In a possible implementation, the certificate center server 301 is further configured to receive the certificate and second signature information which are sent by the terminal 303, verify the certificate based on the second signature information, obtain first signature information if the verification of the certificate is passed, and send the fingerprint information including the first signature information and the second signature information to the blockchain node 302. The second signature information is a signature made by the terminal for the certificate, and the first signature information is a signature made by the certificate center server for the certificate.

In a possible implementation, based on the system structure of Fig. 3, referring to Fig. 4, the system further includes a supervision terminal 304.

The certificate center server 301, the terminal 303 and/or the supervision terminal 304 are configured to obtain the fingerprint information of the certificate from the blockchain, and verify the certificate stored by the certificate center server based on at least one piece of signature information in the fingerprint information.

In a possible implementation, the blockchain node 302 is further configured to verify the fingerprint information based on third signature information, and store the fingerprint information and the third signature information to the blockchain if the verification of the fingerprint information is passed. The third signature information is a signature made by the certificate center server 301 for the fingerprint information.

In a possible implementation, the certificate center server 301 is further configured to, when receiving an acquisition request for the certificate from another network device, send public information in the certificate to the network device. The "another network device" is a network device other than the terminal.

In a possible implementation, the blockchain node 302 is further configured to process a transaction request when receiving the transaction request from a first terminal to complete a transaction between the first terminal and a second terminal.

The first terminal and the second terminal are served by the same service institution or by different service institutions.

In a possible implementation, the blockchain node 302 is further configured to, when receiving a transaction request from the first terminal, verify an identity of the first terminal based on public information in fingerprint information of a certificate of the first terminal on the blockchain, verify an identity of the second terminal based on public information in fingerprint information of a certificate of the second terminal on the blockchain, and process the transaction request if the identity verification of the first terminal and the identity verification of the second terminal are both passed, to complet the transaction between the first terminal and the second terminal.

In a possible implementation, one of the plurality of blockchain nodes 302 is configured to configure public information in certificates of each blockchain node and each certificate center server, and one of the plurality of certificate center servers 301 is configured to configure public information in certificates of each blockchain node and each certificate center server. Alternatively, one of the plurality of blockchain nodes 302 is configured to configure the certificates of each blockchain node and each certificate center server, and one of the plurality of certificate center servers 301 is configured to configure the certificates of each blockchain node and each certificate center server. Alternatively, the certificate management system may further include a general certificate center server 305, configured to manage the certificates of each certificate center server and each blockchain node, as shown in Fig. 5.

All of the above-mentioned optional technical solutions may be combined arbitrarily to form alternative embodiments of the present application, which are not be described in detail herein.

When the certificate management system provided by the above embodiments manages the certificates, the management process is described only by taking the division of the network device performing above-mentioned various functions as an example. In a practical application, the above-mentioned functions ,may be completed by different network devices as required, i.e. an internal structure of the system is divided into network devices performing different functions to complete all or part of the above-mentioned functions. In addition, the certificate management system and the certificate management method provided by the embodiments belong to the same concept, so a specific implementation process of the certificate management system may refer to the above method embodiments and will not be described in detail herein.

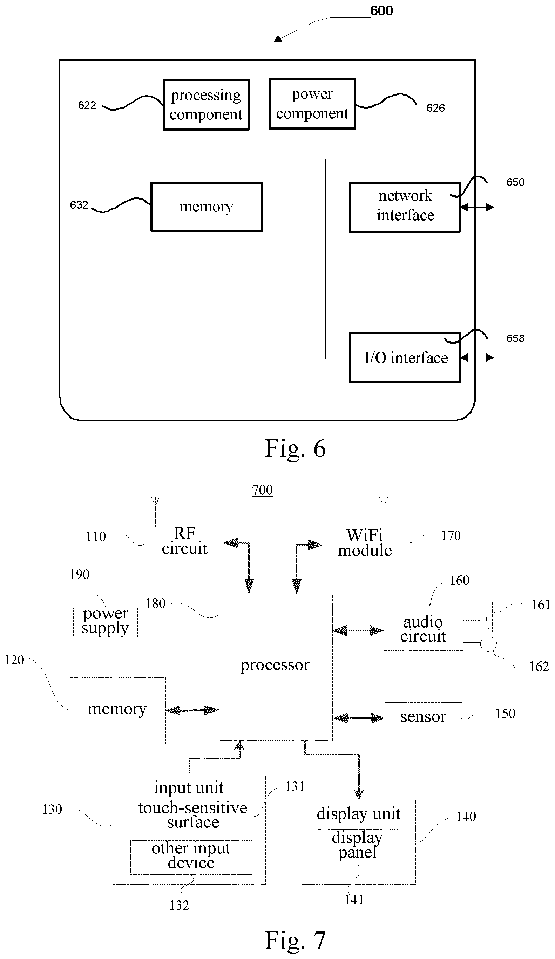

Fig. 6 is a block diagram of a server 600 according to embodiments of the present application. For example, referring to Fig. 6, the server 600 includes a processing component 622 that further includes one or more processors (not shown in the figure) and memory resources represented by a memory 632 for storing computer-readable instructions executable by the processing component 622, for example, application programs. The application programs stored in the memory 632 may include one or more modules (not shown in the figure), each of which corresponds to a set of computer-readable instructions. In addition, the processing component 622 is configured to execute the computer-readable instructions (which may be executed by one or more processors in the processing component 622) to implement the functions of the certificate center server or the blockchain node in the certificate management system described above, thereby implementing the certificate management method. It can be understood that the memory 632 may include a computer-readable storage medium and an internal memory (which are not shown in the figure). The computer-readable storage medium and the internal memory may store the computer-readable instructions. The computer-readable storage medium may be a non-transitory computer-readable storage medium.

The server 600 may further include a power component 626 configured to perform power management for the server 600, a wired or wireless network interface 650 configured to connect the server 600 to a network, and an input/output (I/O) interface 658. The server 600 may be operated based on an operation system stored in the memory 632, such as Windows ServerTM, Mac OS XTM, UnixTM, LinuxTM, FreeBSDTM, or the like.

The server 600 may serve as the certificate center server in the embodiment shown by Fig. 2. The wired or wireless network interface 650 may receive a certificate registration request of the terminal, return the certificate of the terminal, receive the certificate of the terminal and the second signature information, send the verification failure prompt, and send the fingerprint information to the blockchain node. The processing component 622 may register the certificate for the terminal, verify the certificate based on the second signature information, and obtain the first signature information when the verification is passed.

The server 600 may also serve as the blockchain node in the embodiment shown by Fig. 2. The wired or wireless network interface 650 may receive the fingerprint information, and the processing component 622 may store the fingerprint information to the blockchain.

In an exemplary embodiment, one or more computer-readable storage mediums are also provided, such as a memory including computer-readable instructions. The computer-readable instructions may be loaded and executed by one or more processors in the server to complete the functions of the certificate center server or the blockchain node in the certificate management system. For example, the computer-readable storage mediums may be a ROM, a RAM, a CD-ROM, a magnetic tape, a floppy disk, an optical data storage device, and the like. In one embodiment, the computer-readable storage medium may be a non-transitory computer-readable storage medium.

Fig. 7 is a block diagram of a terminal according to embodiments of the present application. Referring to Fig. 7, the terminal 700 may be configured to perform the functions of the terminal in the above certificate management system. The terminal 700 may include an RF (Radio Frequency) circuit 110, a memory 120 including one or more computer-readable storage mediums, an input unit 130, a display unit 140, a sensor 150, an audio circuit 160, a WiFi (Wireless Fidelity) module 170, a processor 180 including one or more processing cores, and a power supply 190. Those skilled in the art can understand that the terminal structure shown in Fig. 7 is not used to limit the terminal, and may include more or fewer components than the shown in the figure, or combine some components, or adopt different arrangements of components.

The RF circuit 110 may be configured to receive and transmit signals during an information receiving and transmitting process or a communication process. In particular, after receiving downlink information of a base station, the RF circuit 110 transfers the downlink information to the one or more processors 180 for processing, and sends uplink-related data to the base station.

The memory 120 may be configured to store software programs and modules, and the processor 180 executes various functional applications and data processing by running the software programs and modules stored in the memory 120. The memory 120 may include a program storing area and a data storing area. The program storing area may store an operation system, an application program (such as a sound playing function, an image playing function, etc.) required by at least one function. The data storing area may store data created according to the use of the terminal 700, such as audio data, a phone book, etc. In addition, the memory 120 may include a high-speed random access memory, and may further include a non-transitory memory, such as at least one magnetic disk storage device, a flash memory device, or other transitory solid state memory devices. Accordingly, the memory 120 may further include a memory controller to provide access to the memory 120 for the processor 180 and the input unit 130. The terminal may further include a computer-readable storage medium. The computer-readable storage medium may be a non-transitory computer-readable storage medium. The non-transitory computer-readable storage medium stores computer-readable instructions. The computer-readable instructions may be executed by one or more processors 180 to implement the functions of the certificate center server or the blockchain node in the certificate management system described above, thereby implementing the certificate management method.

The input unit 130 may be configured to receive input numeric or character information and generate signal input of keyboard, mouse, joystick, optical or trackball related to user settings and functional control. Specifically, the input unit 130 may include a touch-sensitive surface 131 and other input device 132. The touch-sensitive surface 131 is also referred to as a touch display screen or a touch pad.

The display unit 140 may be configured to display information input by a user or information provided to the user and various graphical user interfaces of the terminal 700. The display unit 140 may include a display panel 141. Further, the touch-sensitive surface 131 may cover the display panel 141. When detecting a touch operation on or near the touch-sensitive surface 131, the touch-sensitive surface 131 communicate a touch event to the processor 180 to determine the type of the touch event. Afterwards, the processor 180 provides a corresponding visual output on the display panel 141 based on the type of the touch event. In other embodiments, the touch-sensitive surface 131 may be integrated with the display panel 141 to implement the input and output functions.

The terminal 700 may further include a speaker 161 and a microphone 162. The audio circuit 160, the speaker 161 and the microphone 162 may provide an audio interface between the user and the terminal 700.

Specifically, in this embodiment, the display unit of the terminal is a touch screen display, and the terminal further includes a memory and one or more programs. The one or more programs are stored in the memory and configured to be executed by the one or more processors. The one or more programs is used for performing functions of the terminal in the certificate management system described above.

When the terminal 700 serves as the terminal in the embodiment shown by Fig. 2, the WiFi module 170 may send the certificate registration request to the certificate center server, receive the certificate returned by the certificate center server, and send the certificate and the second signature information to the certificate center server. The processor 180 obtains the second signature information.

It should be understood that steps in various embodiments of the present application are not necessarily performed sequentially in the order indicated by the step numbers. Unless explicitly stated herein, the execution order of the steps is not limited strictly, and the steps may be performed in other orders. Moreover, at least part of the steps in various embodiments may include multiple sub-steps or stages. These sub-steps or stages are not necessarily performed at the same time, but may be performed at different times. These sub-steps or stages are also not necessarily performed sequentially, but may be performed alternately or alternatively with other steps or at least part of the sub-steps or stages of the other steps.

Those skilled in the art can understand that all or part of the processes for implementing the method of the above embodiments can be implemented by instructing related hardware by computer programs. The computer programs may be stored in a non-transitory computer-readable storage medium and when executed, may include the processes of the method embodiments described above. Any reference to memories, storage, databases or other mediums used in the various embodiments provided herein may include non-transitory and/or transitory memories. The non-transitory memory may include a read only memory (ROM), a programmable ROM (PROM), an electrically programmable ROM (EPROM), an electrically erasable programmable ROM (EEPROM), or a flash memory. The transitory memory may include a random access memory (RAM) or an external cache memory. By way of illustration and not limitation, RAM is available in many forms, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a rambus direct RAM (RDRAM), a direct memory bus dynamic RAM (DRDRAM), a rambus dynamic RAM (RDRAM), etc.

The various technical features of the above embodiments can be combined arbitrarily. In order to simplify the description, not all possible combinations of the various technical features of the above embodiments are described. However, as long as there is no contradiction in the combinations of these technical features, all combinations should be considered as the scope of disclosure described in this specification.

The foregoing is only several embodiments of the present application, and the protection scope of the present application is not limited to this. It should be noted that any modification and improvement which can be made by those skilled in the art within the principle of the present application should be covered in the protection scope of the present application. And thus, the protection scope of the present application should be defined by the claims.

## Claims

1. A certificate management system, comprising a plurality of certificate center servers (301), a plurality of blockchain nodes (302) and a plurality of terminals (303), wherein a plurality of service institutions deploy their own certificate center servers (301) respectively, each certificate center server (301) is configured to manage a certificate of a terminal (303) served by the service institution corresponding to the certificate center server (301), the service institution corresponding to the certificate center server (301) is a service institution deploying the certificate center server (301), the plurality of blockchain nodes (302) are configured with a same blockchain, and the blockchain is used for storing fingerprint information of a certificate of a terminal (303) served by each service institution;
each certificate center server (301) is configured to register or update the certificate for the terminal (303) served by the service institution corresponding to the certificate center server (301), obtain fingerprint information of the certificate based on at least one piece of signature information of the certificate, and send the fingerprint information to any blockchain node (302), wherein the fingerprint information is used for verifying whether the certificate is tampered with;
the blockchain node (302) is configured to store the fingerprint information to the blockchain when receiving the fingerprint information;
wherein the certificate management system further comprises a general certificate center server (305), configured to manage the certificates of each certificate center server (301) and each blockchain node (302), determine whether to authorize a network device to become a certificate center server (301).

2. The system of claim 1, wherein the certificate center server (301) is further configured to receive the certificate and second signature information which are sent by the terminal (303), verify the certificate based on the second signature information, obtain first signature information when the verification of the certificate is passed, and send the fingerprint information including the first signature information and the second signature information to the blockchain node (302), wherein the first signature information is a signature made by the certificate center server (301) for the certificate, and the second signature information is a signature made by the terminal (303) for the certificate.

3. The system of claim 2, further comprising a supervision terminal (304), wherein
the certificate center server (301), the terminal (303) and/or the supervision terminal (304) are configured to obtain the fingerprint information of the certificate from the blockchain, and verify the certificate stored by the certificate center server (301) based on at least one piece of signature information in the fingerprint information.

4. The system of claim 1, wherein the blockchain node is further configured to verify the fingerprint information based on third signature information, and store the fingerprint information and the third signature information to the blockchain when the verification of the fingerprint information is passed, wherein the third signature information is a signature made by the certificate center server (301) for the fingerprint information.

5. The system of claim 1, wherein the certificate center server (301) is further configured to send public information in the certificate to another network device when receiving an acquisition request for the certificate from the another network device, and the another network device is a network device other than the terminal (303).

6. The system of claim 1, wherein the blockchain node (302) is further configured to process a transaction request when receiving the transaction request from a first terminal to complete a transaction between the first terminal and a second terminal, wherein the first terminal and the second terminal are served by a same service institution or by different service institutions.

7. The system of claim 6, wherein the blockchain node (302) is further configured to, when receiving the transaction request from the first terminal, verify an identity of the first terminal based on public information in fingerprint information of a certificate of the first terminal on the blockchain and an identity of the second terminal based on public information in fingerprint information of a certificate of the second terminal on the blockchain, and process the transaction request to complete the transaction between the first terminal and the second terminal when the identity verification of the first terminal and the identity verification of the second terminal are both passed.

8. The system of claim 1, wherein one of the plurality of blockchain nodes (302) is configured to configure public information in certificates of each blockchain node (302) and each certificate center server (301), and one of the plurality of certificate center servers (301) is configured to configure the public information in the certificates of each blockchain node (302) and each certificate center server (301); or one of the plurality of blockchain nodes (302) is configured to configure the certificates of each blockchain node (302) and each certificate center server (301), and one of the plurality of certificate center servers (301) is configured to configure the certificates of each blockchain node (302) and each certificate center server (301).

9. A certificate management method, applied to a certificate management system, whereby a plurality of service institutions deploy their own certificate center servers (301) respectively, the certificate management system comprises a plurality of certificate center servers (301), a plurality of blockchain nodes (302) and a plurality of terminals (303), each certificate center server (301) is configured to manage a certificate of a terminal (303) served by the service institution corresponding to the certificate center server (301), the service institution corresponding to the certificate center server (301) is a service institution deploying the certificate center server (301), the plurality of blockchain nodes (302) are configured with a same blockchain, and the blockchain is used for storing fingerprint information of a certificate of a terminal (303) served by each service institution;
the method comprises:
registering (201) or updating, by each certificate center server (301), the certificate for the terminal (303) served by the service institution corresponding to the certificate center server (301);
obtaining, by the certificate center server (301), fingerprint information of the certificate based on at least one piece of signature information of the certificate;
sending (204), by the certificate center server (301), the fingerprint information to any blockchain node (302), wherein the fingerprint information is used for verifying whether the certificate is tampered with; and
storing (205), by the blockchain node (302), the fingerprint information to the blockchain when receiving the fingerprint information;
wherein the certificate management system further comprises a general certificate center server (305), configured to manage the certificates of each certificate center server (301) and each blockchain node (302), determine whether to authorize a network device to become a certificate center server (301).

10. The method of claim 9, further comprising:
receiving, by the certificate center server (301), the certificate and second signature information which are sent by the terminal (303), wherein the second signature information is a signature made by the terminal (303) for the certificate;
verifying (203), by the certificate center server (301), the certificate based on the second signature information;
obtaining first signature information when the verification of the certificate is passed, wherein the first signature information is a signature made by certificate center server (301) for the certificate; and
sending (204), by the certificate center server (301), the fingerprint information to any blockchain node (302), which comprises:
sending, by the certificate center server (301), the fingerprint information including the first signature information and the second signature information to the blockchain node (302).

11. The method of claim 10, wherein the certificate management system further comprises a supervision terminal (304), and the method further comprising:
obtaining, by the certificate center server (301), the fingerprint information of the certificate from the blockchain, and verifying the certificate stored by the certificate center server (301) based on at least one piece of signature information in the fingerprint information; and/or
obtaining, by the terminal (303), the fingerprint information of the certificate from the blockchain, and verifying the certificate stored by the certificate center server (301) based on at least one piece of signature information in the fingerprint information; and/or
obtaining, by the supervision terminal (304), the fingerprint information of the certificate from the blockchain, and verifying the certificate stored by the certificate center server (301) based on at least one piece of signature information in the fingerprint information.

12. The method of claim 9, further comprising:
processing, by the blockchain node (302), a transaction request when receiving the transaction request from a first terminal to complete the transaction between the first terminal and a second terminal, wherein the first terminal and the second terminal are served by a same service institution or by different service institutions.

13. The method of claim 9, further comprising:
verifying, by the blockchain node (302), the fingerprint information based on third signature information, and storing the fingerprint information and the third signature information to the blockchain when the verification of the fingerprint information is passed, wherein the third signature information is a signature made by the certificate center server (301) for the fingerprint information.

14. One or more computer-readable storage mediums, configured in any network device among the plurality of certificate center servers (301), the plurality of blockchain nodes (302) and the plurality of terminals (303) which are comprised in the certificate management system as claimed in any one of claims 1 to 8, and storing computer-readable instructions which when loaded and executed by one or more processors, perform functions of the network device.

15. A network device, being any network device among the plurality of certificate center servers (301), the plurality of blockchain nodes (302) and the plurality of terminals (303) which are comprised in the certificate management system as claimed in any one of claims 1 to 8, and comprising one or more processors and a memory, wherein the memory stores computer-readable instructions which when loaded and executed by the one or more processors, perform functions of the network device.

## Patentansprüche

1. Zertifikatverwaltungssystem, mehrere Zertifikatzentralserver (301), mehrere Blockchain-Knoten (302) und mehrere Endgeräte (303) umfassend, wobei mehrere Diensteinrichtungen jeweils ihre eigenen Zertifikatzentralserver (301) verwenden, wobei jeder Zertifikatzentralserver (301) dafür konfiguriert ist, ein Zertifikat eines Endgeräts (303) zu verwalten, das durch die Diensteinrichtung bedient wird, die dem Zertifikatzentralserver (301) entspricht, wobei die Diensteinrichtung, die dem Zertifikatzentralserver (301) entspricht, eine Diensteinrichtung ist, die den Zertifikatzentralserver (301) verwendet, wobei die mehreren Blockchain-Knoten (302) mit einer gleichen Blockchain konfiguriert sind und die Blockchain zum Speichern von Fingerabdruckinformationen eines Zertifikats eines Endgeräts (303) verwendet wird, das von jeder Diensteinrichtung bedient wird,
wobei jeder Zertifikatzentralserver (301) dafür konfiguriert ist, das Zertifikat für das Endgerät (303), das von der Diensteinrichtung bedient wird, die dem Zertifikatzentralserver (301) entspricht, zu registrieren oder zu aktualisieren, Fingerabdruckinformationen des Zertifikats basierend auf mindestens einer Signaturinformation des Zertifikats zu beziehen und die Fingerabdruckinformationen an einen beliebigen Blockchain-Knoten (302) zu senden, wobei die Fingerabdruckinformationen verwendet werden, um zu überprüfen, ob das Zertifikat gefälscht ist,
wobei der Blockchain-Knoten (302) dafür konfiguriert ist, die Fingerabdruckinformationen in der Blockchain zu speichern, wenn die Fingerabdruckinformationen empfangen werden,
wobei das Zertifikatverwaltungssystem ferner einen allgemeinen Zertifikatzentralserver (305) umfasst, der dafür konfiguriert ist, die Zertifikate jedes Zertifikatzentralservers (301) und jedes Blockchain-Knotens (302) zu verwalten, zu bestimmen, ob ein Netzwerkgerät zu autorisieren ist, ein Zertifikatzentralserver (301) zu werden.

2. System nach Anspruch 1, wobei der Zertifikatzentralserver (301) ferner dafür konfiguriert ist, das Zertifikat und zweite Signaturinformationen zu empfangen, die von dem Endgerät (303) gesendet werden, das Zertifikat basierend auf den zweiten Signaturinformationen zu überprüfen, erste Signaturinformationen zu beziehen, wenn die Überprüfung des Zertifikats dessen Gültigkeit ergab, und die Fingerabdruckinformationen einschließlich der ersten Signaturinformationen und der zweiten Signaturinformationen an den Blockchain-Knoten (302) zu senden, wobei die ersten Signaturinformationen eine Signatur sind, die durch den Zertifikatzentralserver (301) für das Zertifikat erstellt wird, und die zweiten Signaturinformationen eine Signatur sind, die von dem Endgerät (303) für das Zertifikat erstellt werden.

3. System nach Anspruch 2, ferner ein Aufsichtsendgerät (304) umfassend, wobei
der Zertifikatzentralserver (301), das Endgerät (303) und/oder das Aufsichtsendgerät (304) dafür konfiguriert sind/ist, die Fingerabdruckinformationen des Zertifikats von der Blockchain zu beziehen und das von dem Zertifikatzentralserver (301) gespeicherte Zertifikat basierend auf mindestens einer Signaturinformation in den Fingerabdruckinformationen zu überprüfen.

4. System nach Anspruch 1, wobei der Blockchain-Knoten ferner dafür konfiguriert ist, die Fingerabdruckinformationen basierend auf dritten Signaturinformationen zu überprüfen und die Fingerabdruckinformationen und die dritten Signaturinformationen in der Blockchain zu speichern, wenn die Überprüfung der Fingerabdruckinformationen deren Gültigkeit ergab, wobei die dritten Signaturinformationen eine Signatur sind, die von dem Zertifikatzentralserver (301) für die Fingerabdruckinformationen erstellt wird.

5. System nach Anspruch 1, wobei der Zertifikatzentralserver (301) ferner dafür konfiguriert ist, öffentliche Informationen in dem Zertifikat an ein anderes Netzwerkgerät zu senden, wenn eine Erfassungsanfrage für das Zertifikat von dem anderen Netzwerkgerät empfangen wird und das andere Netzwerkgerät ein anderes Netzwerkgerät als das Endgerät (303) ist.

6. System nach Anspruch 1, wobei der Blockchain-Knoten (302) ferner dafür konfiguriert ist, eine Transaktionsanfrage zu verarbeiten, wenn die Transaktionsanfrage von einem ersten Endgerät empfangen wird, um eine Transaktion zwischen dem ersten Endgerät und einem zweiten Endgerät abzuschließen, wobei das erste Endgerät und das zweite Endgerät von einer gleichen Diensteinrichtung oder von verschiedenen Diensteinrichtungen bedient werden.

7. System nach Anspruch 6, wobei der Blockchain-Knoten (302) ferner dafür konfiguriert ist, beim Empfangen der Transaktionsanfrage von dem ersten Endgerät basierend auf öffentlichen Informationen in Fingerabdruckinformationen eines Zertifikats des ersten Endgeräts an der Blockchain eine Identität des ersten Endgeräts und basierend auf öffentlichen Informationen in den Fingerabdruckinformationen eines Zertifikats des zweiten Endgeräts an der Blockchain eine Identität des zweiten Endgeräts zu überprüfen und die Transaktionsanfrage zu verarbeiten, um die Transaktion zwischen dem ersten Endgerät und dem zweiten Endgerät abzuschließen, wenn die Identitätsüberprüfung des ersten Endgeräts und die Identitätsüberprüfung des zweiten Endgeräts in beiden Fällen deren Gültigkeit ergab.

8. System nach Anspruch 1, wobei einer der mehreren Blockchain-Knoten (302) dafür konfiguriert ist, öffentliche Informationen in Zertifikaten jedes Blockchain-Knotens (302) und jedes Zertifikatzentralservers (301) zu konfigurieren, und einer der mehreren Zertifikatzentralserver (301) dafür konfiguriert ist, die öffentlichen Informationen in den Zertifikaten jedes Blockchain-Knotens (302) und jedes Zertifikatzentralservers (301) zu konfigurieren, oder einer der mehreren Blockchain-Knoten (302) dafür konfiguriert ist, die Zertifikate jedes Blockchain-Knotens (302) und jedes Zertifikatzentralservers (301) zu konfigurieren und einer der mehreren Zertifikatzentralserver (301) dafür konfiguriert ist, die Zertifikate jedes Blockchain-Knotens (302) und jedes Zertifikatzentralservers (301) zu konfigurieren.

9. Zertifikatverwaltungsverfahren, angewandt auf ein Zertifikatverwaltungssystem, wobei mehrere Diensteinrichtungen jeweils ihren eigenen Zertifikatzentralserver (301) verwenden, das Zertifikatverwaltungssystem mehrere Zertifikatzentralserver (301), mehrere Blockchain-Knoten (302) und mehrere Endgeräte (303) umfasst, jeder Zertifikatzentralserver (301) dafür konfiguriert ist, ein Zertifikat eines Endgeräts (303) zu verwalten, das durch die Diensteinrichtung bedient wird, die dem Zertifikatzentralserver (301) entspricht, wobei die Diensteinrichtung, die dem Zertifikatzentralserver (301) entspricht, eine Diensteinrichtung ist, die den Zertifikatzentralserver (301) verwendet, wobei die mehreren Blockchain-Knoten (302) mit der gleichen Blockchain konfiguriert sind und die Blockchain zum Speichern von Fingerabdruckinformationen eines Zertifikats eines Endgeräts (303) verwendet wird, das von jeder Diensteinrichtung bedient wird,
wobei das Verfahren folgendes umfasst:
Registrieren (201) oder Aktualisieren des Zertifikats für das Endgerät (303), das von der Diensteinrichtung bedient wird, die dem Zertifikatzentralserver (301) entspricht, durch jeden Zertifikatzentralserver (301),
Beziehen von Fingerabdruckinformationen des Zertifikats basierend auf mindestens einer Signaturinformation des Zertifikats durch den Zertifikatzentralserver (301),
Senden (204) der Fingerabdruckinformationen an einen beliebigen Blockchain-Knoten (302) durch den Zertifikatzentralserver (301), wobei die Fingerabdruckinformationen verwendet werden, um zu überprüfen, ob das Zertifikat gefälscht ist, und
Speichern (205) der Fingerabdruckinformationen in der Blockchain durch den Blockchain-Knoten (302) beim Empfangen der Fingerabdruckinformationen,
wobei das Zertifikatverwaltungssystem ferner einen allgemeinen Zertifikatzentralserver (305) umfasst, der dafür konfiguriert ist, die Zertifikate jedes Zertifikatzentralservers (301) und jedes Blockchain-Knotens (302) zu verwalten, zu bestimmen, ob ein Netzwerkgerät zu autorisieren ist, ein Zertifikatzentralserver (301) zu werden.

10. Verfahren nach Anspruch 9, ferner Folgendes umfassend:
Empfangen des Zertifikats und zweiter Signaturinformationen, die von dem Endgerät (303) gesendet werden, durch den Zertifikatzentralserver (301), wobei die zweiten Signaturinformationen eine Signatur sind, die von dem Endgerät (303) für das Zertifikat erstellt wird,
Überprüfen (203) des Zertifikats basierend auf den zweiten Signaturinformationen durch den Zertifikatzentralserver (301),
Beziehen erster Signaturinformationen, wenn die Überprüfung des Zertifikats dessen Gültigkeit ergab, wobei die ersten Signaturinformationen eine Signatur sind, die von dem Zertifikatzentralserver (301) für das Zertifikat erstellt wird,
Senden (204) der Fingerabdruckinformationen an einen beliebigen Blockchain-Knoten (302) durch den Zertifikatzentralserver (301), das Folgendes umfasst:
Senden der Fingerabdruckinformationen einschließlich der ersten Signaturinformationen und der zweiten Signaturinformationen an den Blockchain-Knoten (302) durch den Zertifikatzentralserver (301).

11. Verfahren nach Anspruch 10, wobei das Zertifikatverwaltungssystem ferner ein Aufsichtsendgerät (304) umfasst und das Verfahren ferner Folgendes umfasst:
Beziehen der Fingerabdruckinformationen des Zertifikats von der Blockchain durch den Zertifikatzentralserver (301) und Überprüfen des von dem Zertifikatzentralserver (301) gespeicherten Zertifikats basierend auf mindestens einer Signaturinformation in den Fingerabdruckinformationen und/oder
Beziehen der Fingerabdruckinformationen des Zertifikats von der Blockchain durch das Endgerät (303) und Überprüfen des von dem Zertifikatzentralserver (301) gespeicherten Zertifikats basierend auf mindestens einer Signaturinformation in den Fingerabdruckinformationen und/oder
Beziehen der Fingerabdruckinformationen des Zertifikats von der Blockchain durch das Aufsichtsendgerät (304) und Überprüfen des von dem Zertifikatzentralserver (301) gespeicherten Zertifikats basierend auf mindestens einer Signaturinformation in den Fingerabdruckinformationen.

12. Verfahren nach Anspruch 9, ferner Folgendes umfassend:
Verarbeiten einer Transaktionsanfrage durch den Blockchain-Knoten (302), wenn die Transaktionsanfrage von einem ersten Endgerät empfangen wird, , um die Transaktion zwischen dem ersten Endgerät und einem zweiten Endgerät abzuschließen, wobei das erste Endgerät und das zweite Endgerät von einer gleichen Diensteinrichtung oder von verschiedenen Diensteinrichtungen bedient werden.

13. Verfahren nach Anspruch 9, ferner Folgendes umfassend:
Überprüfen der Fingerabdruckinformationen basierend auf dritten Signaturinformationen durch den Blockchain-Knoten (302) und Speichern der Fingerabdruckinformationen und der dritten Signaturinformationen in der Blockchain, wenn die Überprüfung der Fingerabdruckinformationen deren Gültigkeit ergab, wobei die dritten Signaturinformationen eine Signatur sind, die von dem Zertifikatzentralserver (301) für die Fingerabdruckinformationen erstellt wird.

14. Computerlesbares Medium oder mehrere computerlesbare Medien, konfiguriert in einem beliebigen Netzwerkgerät von den mehreren Zertifikatzentralservern (301), den mehreren Blockchain-Knoten (302) und den mehreren Endgeräten (303), die in dem Zertifikatverwaltungssystem nach einem der Ansprüche 1 bis 8 enthalten sind, und computerlesbare Befehle speichernd, die, wenn sie geladen und von einem oder mehreren Prozessoren ausgeführt werden, Funktionen des Netzwerkgeräts ausführen.

15. Netzwerkgerät, das ein beliebiges Netzwerkgerät von den mehreren Zertifikatzentralservern (301), den mehreren Blockchain-Knoten (302) und den mehreren Endgeräten (303) ist, die in dem Zertifikatverwaltungssystem nach einem der Ansprüche 1 bis 8 enthalten sind, und einen oder mehrere Prozessoren und einen Speicher umfassend, wobei der Speicher computerlesbare Befehle speichert, die, wenn sie geladen und von dem einen oder den mehreren Prozessoren ausgeführt werden, Funktionen des Netzwerkgeräts ausführen.

## Revendications

1. Système de gestion de certificats comprenant une pluralité de serveurs de centre de certificats (301), une pluralité de nœuds de chaîne de blocs (302) et une pluralité de terminaux (303), dans lequel une pluralité d'établissements de services déploient respectivement leurs propres serveurs de centre de certificats (301), chaque serveur de centre de certificats (301) est configuré pour gérer un certificat d'un terminal (303) desservi par l'établissement de services correspondant au serveur de centre de certificats (301), l'établissement de services correspondant au serveur de centre de certificats (301) est un établissement de services déployant le serveur de centre de certificats (301), la pluralité des nœuds de chaîne de blocs (302) sont configurés avec une même chaîne de blocs, et la chaîne de blocs est utilisée pour stocker des informations d'empreinte digitale d'un certificat d'un terminal (303) desservi par chaque établissement de services ;
chaque serveur de centre de certificats (301) est configuré pour enregistrer ou mettre à jour le certificat pour le terminal (303) desservi par l'établissement de services correspondant au serveur de centre de certificats (301), obtenir des informations d'empreinte digitale du certificat sur la base d'au moins un élément d'information de signature du certificat, et envoyer les informations d'empreinte digitale à un nœud de chaîne de blocs (302) quelconque, dans lequel les informations d'empreinte digitale sont utilisées pour vérifier si le certificat est altéré ;
le nœud de chaîne de blocs (302) est configuré pour stocker les informations d'empreinte digitale dans la chaîne de blocs à la réception des informations d'empreinte digitale ;
dans lequel le système de gestion de certificats comprend en outre un serveur de centre de certificats général (305), configuré pour gérer les certificats de chaque serveur de centre de certificats (301) et chaque nœud de chaîne de blocs (302), déterminer s'il convient d'autoriser un dispositif de réseau à devenir un serveur de centre de certificats (301).

2. Système selon la revendication 1, dans lequel le serveur de centre de certificats (301) est en outre configuré pour recevoir le certificat et une deuxième information de signature envoyés par le terminal (303), vérifier le certificat sur la base de la deuxième information de signature, obtenir une première information de signature lorsque la vérification du certificat est réussie, et envoyer les informations d'empreinte digitale comprenant la première information de signature et la deuxième information de signature au nœud de chaîne de blocs (302), dans lequel la première information de signature est une signature faite par le serveur de centre de certificats (301) pour le certificat, et la deuxième information de signature est une signature faite par le terminal (303) pour le certificat.

3. Système selon la revendication 2, comprenant en outre un terminal de supervision (304), dans lequel
le serveur de centre de certificats (301), le terminal (303) et/ou le terminal de supervision (304) sont configurés pour obtenir les informations d'empreinte digitale du certificat de la part de la chaîne de blocs, et vérifier le certificat stocké par le serveur de centre de certificats (301) sur la base d'au moins un élément d'information de signature dans les informations d'empreinte digitale.

4. Système selon la revendication 1, dans lequel le nœud de chaîne de blocs est en outre configuré pour vérifier les informations d'empreinte digitale sur la base d'une troisième information de signature, et stocker les informations d'empreinte digitale et la troisième information de signature dans la chaîne de blocs lorsque la vérification des informations d'empreinte digitale est réussie, dans lequel la troisième information de signature est une signature faite par le serveur de centre de certificats (301) pour les informations d'empreinte digitale.

5. Système selon la revendication 1, dans lequel le serveur de centre de certificats (301) est en outre configuré pour envoyer de l'information publique dans le certificat à un autre dispositif de réseau à la réception d'une demande d'acquisition pour le certificat de la part de l'autre dispositif de réseau, et l'autre dispositif de réseau est un dispositif de réseau autre que le terminal (303).

6. Système selon la revendication 1, dans lequel le nœud de chaîne de blocs (302) est en outre configuré pour traiter une demande de transaction à la réception de la demande de transaction de la part d'un premier terminal pour compléter une transaction entre le premier terminal et un deuxième terminal, dans lequel le premier terminal et le deuxième terminal sont desservis par un même établissement de services ou par différents établissements de services.

7. Système selon la revendication 6, dans lequel le nœud de chaîne de blocs (302) est en outre configuré pour, à la réception de la demande de transaction du premier terminal, vérifier une identité du premier terminal sur la base d'une information publique dans des informations d'empreinte digitale d'un certificat du premier terminal sur la chaîne de blocs et une identité du deuxième terminal sur la base d'une information publique dans des informations d'empreinte digitale d'un certificat du deuxième terminal sur la chaîne de blocs, et traiter la demande de transaction pour compléter la transaction entre le premier terminal et le deuxième terminal lorsque la vérification d'identité du premier terminal et la vérification d'identité du deuxième terminal ont toutes deux réussi.

8. Système selon la revendication 1, dans lequel l'un de la pluralité des nœuds de chaîne de blocs (302) est configuré pour configurer de l'information publique dans des certificats de chaque nœud de chaîne de blocs (302) et chaque serveur de centre de certificats (301), et l'un de la pluralité des serveurs de centre de certificats (301) est configuré pour configurer l'information publique dans les certificats de chaque nœud de chaîne de blocs (302) et chaque serveur de centre de certificats (301) ; ou l'un de la pluralité des nœuds de chaîne de blocs (302) est configuré pour configurer les certificats de chaque nœud de chaîne de blocs (302) et chaque serveur de centre de certificats (301), et l'un de la pluralité des serveurs de centre de certificats (301) est configuré pour configurer les certificats de chaque nœud de chaîne de blocs (302) et chaque serveur de centre de certificats (301).

9. Procédé de gestion de certificats appliqué à un système de gestion de certificats,
dans lequel une pluralité d'établissements de services déploient respectivement leurs propres serveurs de centre de certificats (301), le système de gestion de certificats comprend une pluralité de serveurs de centre de certificats (301), une pluralité de nœuds de chaîne de blocs (302) et une pluralité de terminaux (303), chaque serveur de centre de certificats (301) est configuré pour gérer un certificat d'un terminal (303) desservi par l'établissement de services correspondant au serveur de centre de certificats (301), l'établissement de services correspondant au serveur de centre de certificats (301) est un établissement de services déployant le serveur de centre de certificats (301), la pluralité des nœuds de chaîne de blocs (302) sont configurés avec une même chaîne de blocs, et la chaîne de blocs est utilisée pour stocker des informations d'empreinte digitale d'un certificat d'un terminal (303) desservi par chaque établissement de services ;
le procédé comprenant :
l'enregistrement (201) ou la mise à jour, par chaque serveur de centre de certificats (301), du certificat pour le terminal (303) desservi par l'établissement de services correspondant au serveur de centre de certificats (301) ;
l'obtention, par le serveur de centre de certificats (301), d'informations d'empreinte digitale du certificat sur la base d'au moins un élément d'information de signature du certificat ;
l'envoi (204), par le serveur de centre de certificats (301), des informations d'empreinte digitale à un nœud de chaîne de blocs (302) quelconque, dans lequel les informations d'empreinte digitale sont utilisées pour vérifier si le certificat est altéré ; et
le stockage (205), par le nœud de chaîne de blocs (302), des informations d'empreinte digitale dans la chaîne de blocs à la réception des informations d'empreinte digitale ;
dans lequel le système de gestion de certificats comprend en outre un serveur de centre de certificats général (305), configuré pour gérer les certificats de chaque de chaque serveur de centre de certificats (301) et chaque nœud de chaîne de blocs (302), déterminer s'il convient d'autoriser un dispositif de réseau à devenir un serveur de centre de certificats (301).

10. Procédé selon la revendication 9, comprenant en outre :
la réception, par le serveur de centre de certificats (301), du certificat et d'une deuxième information de signature envoyés par le terminal (303), dans lequel la deuxième information de signature est une signature faite par le terminal (303) pour le certificat ;
la vérification (203), par le serveur de centre de certificats (301), du certificat sur la base de la deuxième information de signature ;
l'obtention d'une première information de signature lorsque la vérification du certificat est réussie, dans lequel la première information de signature est une signature faite par le serveur de centre de certificats (301) pour le certificat ; et
l'envoi (204), par le serveur de centre de certificats (301), des informations d'empreinte digitale à un nœud de chaîne de blocs (302) quelconque, comprenant :
l'envoi, par le serveur de centre de certificats (301), des informations d'empreinte digitale comprenant la première information de signature et la deuxième information de signature au nœud de chaîne de blocs (302).

11. Procédé selon la revendication 10, dans lequel le système de gestion de certificats comprend en outre un terminal de supervision (304), et le procédé comprenant en outre :
l'obtention, par le serveur de centre de certificats (301), des informations d'empreinte digitale du certificat de la part de la chaîne de blocs, et la vérification du certificat stocké par le serveur de centre de certificats (301) sur la base d'au moins un élément d'information de signature dans les informations d'empreinte digitale ; et/ou
l'obtention, par le terminal (303), des informations d'empreinte digitale du certificat de la part de la chaîne de blocs, et la vérification du certificat stocké par le serveur de centre de certificats (301) sur la base d'au moins un élément d'information de signature dans les informations d'empreinte digitale ; et/ou
l'obtention, par le terminal de supervision (304), des informations d'empreinte digitale du certificat de la part de la chaine de blocs, et la vérification du certificat stocké par le serveur de centre de certificats (301) sur la base d'au moins un élément d'information de signature dans les informations d'empreinte digitale.

12. Procédé selon la revendication 9, comprenant en outre :
le traitement, par le nœud de chaîne de blocs (302), d'une demande de transaction à la réception de la demande de transaction d'un premier terminal pour compléter la transaction entre le premier terminal et un deuxième terminal, dans lequel le premier terminal et le deuxième terminal sont desservis par un même établissement de services ou par des établissements de services différents.

13. Procédé selon la revendication 9, comprenant en outre :
la vérification, par le nœud de chaîne de blocs (302), des informations d'empreinte digitale sur la base d'une troisième information de signature, et le stockage des informations d'empreinte digitale et de la troisième information de signature dans la chaîne de blocs lorsque la vérification des informations d'empreinte digitale est réussie, dans lequel la troisième information de signature est une signature faite par le serveur de centre de certificats (301) pour les informations d'empreinte digitale.

14. Un ou plusieurs supports de stockage lisibles par ordinateur, configurés dans un dispositif de réseau quelconque parmi la pluralité des serveurs de centre de certificats (301), la pluralité des nœuds de chaîne de blocs (302) et la pluralité des terminaux (303) faisant partie du système de gestion de certificats tel que revendiqué par l'une quelconque des revendications 1 à 8, et stockant des instructions lisibles par ordinateur lesquelles, lorsque chargées et exécutées par un ou plusieurs processeurs, mettent en oeuvre des fonctions du dispositif de réseau.

15. Dispositif de réseau, lequel est un dispositif de réseau quelconque parmi la pluralité des serveurs de centre de certificats (301), la pluralité des nœuds de chaîne de blocs (302) et la pluralité des terminaux (303) faisant partie du système de gestion de certificats tel que revendiqué par l'une quelconque des revendications 1 à 8, et comprenant un ou plusieurs processeurs et une mémoire, dans lequel la mémoire stocke des instructions lisibles par ordinateur lesquelles, lorsque chargées et exécutées par ce ou ces processeurs, mettent en oeuvre des fonctions du dispositif de réseau.
